# EUROPEAN PATENT APPLICATION

(11) **EP 1 352 923 A1**
(43) Date of publication of application: **15.10.2003**
(21) Application number: 03100856.8
(22) Date of filing: 01.04.2003
(51) Int. Cl.: C08L 7/00, C08L 21/00, B60C 1/00

(54) **Tire with component containing wire reinforcement encapsulated with a rubber composition comprised of cis 1,4-polyisoprene rubber and liquid polyisoprene**

(30) Priority: 09.04.2002 US 119410
(71) Applicant: THE GOODYEAR TIRE & RUBBER COMPANY, Akron, Ohio 44316-0001 (US)
(72) Inventor: Drvol, Charles Edward, Tallmadge, OH 44278 (US); Azer, Shahir Rafael, Fairlawn, OH 44333 (US); Henoumont, Marc Jules Alexis, 6720 Habay-la-Neuve (BE); Rodgers, Michael Brendan, Copley, OH 44321 (US)
(74) Representative: Leitz, Paul

(57) **Abstract**

This invention relates to an unvulcanized rubber tire which has at least one wire reinforced rubber component which contains wire reinforcement encapsulated with an unvulcanized rubber composition comprised of natural cis 1,4-polyisoprene rubber, and liquid polyisoprene polymer. The said encapsulation rubber composition of the tire component is then sulfur cured together with the curing of the tire itself. Such tire component may be, for example, a carcass ply and/or belt ply.

## Description

### Field of the Invention

This invention relates to an unvulcanized rubber tire which has at least one wire reinforced rubber component which contains wire reinforcement encapsulated with an unvulcanized rubber composition comprised of natural cis 1,4-polyisoprene rubber, and liquid polyisoprene polymer. The said encapsulation rubber composition of the tire component is then sulfur cured together with the curing of the tire itself. Such tire component may be, for example, a carcass ply and/or belt ply.

### Background of the Invention

Rubber tires, particularly light and heavy truck tires, contain one or more components (e.g. circumferential belt plies) which contain wire reinforcement which is often encapsulated with natural rubber, namely natural cis 1,4-polyisoprene rubber.

The use of natural rubber (cis-1,4-polyisoprene rubber) for encapsulating the wire reinforcement, particularly for larger tires designed to carry heavy loads is usually preferred because of natural rubber's excellent tear strength and cut growth resistance which is important for the durability of the tire casing, or carcass; and building tack for holding green, uncured, rubber components together which is important when building, or assembling, various tire components together to aid in preventing blows in the rubber components during the curing or the tire component assembly.

However, a typical difficulty in use of such natural rubber is an inherent breakdown of the rubber during high shear mixing in an internal rubber mixer which reduces its Mooney viscosity an acceptable processing level, where further processing, such as calendaring of the rubber onto cord reinforcement, can be reasonably achieved. Thus, while the viscosity of the natural rubber is desirably reduced for processing purposes, by such high shear mixing, various desirable physical properties (e.g. modulus) are also inherently undesirably reduced.

It is believed that such phenomenon of natural rubber breakdown under high shear mixing conditions as well as a preference of natural rubber for wire reinforcement encapsulation for heavy duty tires such as, for example, light truck and heavy truck tires as well as the aforesaid difficulty is well known to those having skill in such art.

In addition, it is believed to be well known to those having skill in such art that the use of resins, such as those based upon resorcinol, aids in promoting the stiffness of the wire coat rubber composition. Sometimes, it is desired to not use quantitative amounts of resorcinol based resin networks in the rubber composition to promote stiffness because the rubber composition may tend to degrade during flexing of a particular rubber component of a tire under working conditions. Therefore, it may sometimes not be desired to use resorcinol-based resin networks in a wire coat rubber composition.

Various resins, including resorcinol-based resins, because of their relatively low molecular weight, as compared to elastomers, may tend to act as plasticizers for the elastomers in the rubber composition. Therefore, the resin may beneficially tend to reduce the viscosity of the rubber composition which contains such resins and aid the processability of the rubber composition. Accordingly, eliminating use of such resins because of the aforesaid potential degrading effect may, in turn, reduce the processability of the rubber composition as may be evidenced by an increased Mooney viscosity.

In the description of this invention the term "phr" relates to parts by weight of an ingredient per 100 parts by weight of elastomer. The terms "elastomer" and "rubber" are used interchangeably unless otherwise indicated. The terms "cured" and "vulcanized", as well as "uncured" and unvulcanized" where used ,are used interchangeably, respectively, unless otherwise indicated. The terms rubber "compound" and rubber "composition" are used interchangeably unless otherwise indicated.

### Summary and Practice of the Invention

In accordance with this invention, a tire is provided having at least one component which contains wire encapsulated with an unvulcanized rubber composition which comprises, based upon 100 parts by weight elastomer, (phr):
(A) 100 phr of natural cis 1,4-polyisoprene rubber,
(B) 5 to 30 phr of liquid cis 1,4-polyisoprene polymer having a number average (Mn) molecular weight of not more than 80,000 and desirably in a range of from 35,000 to 60,000,
(C) 50 to 100 phr of particulate reinforcing filler comprised of carbon black and participated silica which contains from 40 to 80 phr of said carbon black.

A tire is then provided wherein said wire encapsulation rubber composition of said tire component is sulfur cured (together with the curing of the tire itself).

The rubber encapsulation rubber composition, sometimes referred to as a wire coat compound, is comprised of natural rubber, (natural cis 1,4-polyisoprene rubber), as a major portion and the liquid cis 1,4-polyisoprene polymer as a minor portion thereof. It is considered herein that the liquid cis 1,4-polyisoprene polymer is not rubbery in nature until after it is cured, or vulcanized.

The liquid cis 1,4-polyisoprene polymer may be prepared, for example, by the depolymerization of natural rubber to reduce the molecular weight of the polymer and convert it into a viscous liquid.

A commercial liquid cis 1,4-polyisoprene polymer is, for example, DPR-40 from Elementis Performance Polymers.

A significant aspect of this invention, particularly for heavy duty light truck tires and heavy duty heavy truck tires is that the liquid cis 1,4-polyisoprene polymer acts not only as a plasticizer, thereby reducing the viscosity of the uncured rubber composition for a wire coat and improving its processability, but also cures along with the natural rubber, thereby becoming part of the vulcanizate network.

This is a significant aspect of this invention because it is considered herein that various physical properties of significance of a cured rubber composition for a wire coat are not normally significantly degraded, or diluted, by the addition of minor amounts of the liquid cis 1,4-polyisoprene polymer to the unvulcanized encapsulation natural rubber composition , as might be seen with various rubber plasticizers, other than the liquid polyisoprene polymer, such as for example, petroleum rubber processing oils.

Therefore, the use of the liquid cis 1,4-polyisoprene polymer for a wire coat composition, while not an exact substitute for an inclusion of a resorcinol based resin, can add stiffness to the cured wire coat rubber composition while reducing the rubber composition's uncured processing viscosity and thereby improve the processing characteristics of the compound, without the aforesaid resin network considerations, namely network degradation during use in a wire coat composition.

In practice, various wires may be used for the rubber encapsulated wire reinforcement. Representative of various wires are, for example, brass coated steel wires. Such wires are typically in a form of at least one wire filament (e.g. a monofilament) or a cord comprised of a plurality of twisted filaments, sometimes referred to as cabled filaments.

As known to one having skill in such the art, in order to sulfur cure a diene-based rubber such as natural cis 1,4-polyisoprene rubber a sulfur vulcanizing agent is used. Examples of suitable sulfur vulcanizing agents include, for example, elemental sulfur (free sulfur) or a sulfur donating vulcanizing agent, for example, an amine disulfide, polymeric polysulfide or sulfur olefin adducts. Preferably, the sulfur vulcanizing agent is elemental sulfur in the insoluble form. The amount of sulfur vulcanizing agent will vary depending on the components of the rubber stock and the particular type of sulfur vulcanizing agent that is used. The sulfur vulcanizing agent is generally present in an amount ranging from 0.5 to 8 phr. Preferably, the sulfur vulcanizing agent is present in an amount ranging from 0.75 phr to 4 phr.

Conventional rubber additives may be incorporated in the rubber stock of the present invention. The additives commonly used in rubber stocks include fillers, plasticizers, waxes, processing oils, retarders, antiozonants, antioxidants and the like. The total amount of filler that may be used may range from 30 to 150 phr, with a range of from 45 to 100 phr being preferred. Fillers include clays, calcium carbonate, calcium silicate, titanium dioxide and carbon black. Representative carbon blacks that are commonly used in rubber stocks include N326, N330, N472, N630, N642, N660, N754, N762, N765 and N990. Plasticizers are conventionally used in amounts ranging from 2 to 50 phr with a range of 5 to 30 phr being preferred. The amount of plasticizer used will depend upon the softening effect desired. Examples of suitable plasticizers include aromatic extract oils, petroleum softeners including asphaltenes, pentachlorophenol, saturated and unsaturated hydrocarbons and nitrogen bases, coal tar products, cumarone-indene resins and esters such as dibutylphthalate and tricresol phosphate. Common waxes which may be used include paraffinic waxes and microcrystalline blends. Such waxes are used in amounts ranging from 0.5 to 3 phr. Materials used in compounding which function as an accelerator-activator includes metal oxides such as zinc oxide and magnesium oxide which are used in conjunction with acidic materials such as fatty acid, for example, stearic acid, oleic acid and the like. The amount of the metal oxide may range from 1 to 14 phr with a range of from 2 to 8 phr being preferred. The amount of fatty acid which may be used may range from zero phr to 5 phr with a range of from 0 phr to 2 phr being preferred.

Accelerators are used to control the time and/or temperature required for vulcanization and to improve the properties of the vulcanizate. In one embodiment, a single accelerator system may be used; i.e., primary accelerator. The primary accelerator(s) may be used in total amounts ranging from 0.5 to 4, preferably 0.8 to 2, phr. In another embodiment, combinations of a primary and a secondary accelerator might be used with the secondary accelerator being used in a smaller, equal or greater amount to the primary accelerator. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The rubber compounds of the present invention may also contain a cure activator. A representative cure activator is methyl trialkyl (C8-C10) ammonium chloride commercially available under the trademark Adogen® 464 from Sherex Chemical Company of Dublin, Ohio. The amount of activator may be used in a range of from 0.05 to 5 phr.

Synthetic precipitated silica is used in the rubber composition as a particulate reinforcing agent. Such participated silica might be obtained, for example, by the acidification of a soluble silicate, e.g., sodium silicate by various procedures employed by various precipitated silica manufactures. Such precipitated silicas may have a BET surface area, as measured using nitrogen gas, for example in a range of frp, 40 to 600, or in a range of 50 to 300 square meters per gram. The BET method of measuring surface area is described in the Journal of the American Chemical Society, Volume 60, Page 304 (1930). The silica may have a dibutylphthalate (DBP) absorption value in a range of 100 to 400, or from 150 to 300 cm³/100g. Various commercially available silicas may be considered for use in this invention such as, only for example herein, and without limitation, silicas commercially available from PPG Industries under the Hi-Sil trademark with designations 210, 243, etc; silicas available from Rhodia, with, for example, designations of Z1165MP and Z165GR and silicas available from Degussa AG with, for example, designations VN2 and VN3, etc. Since the intended use of a rubber composition containing the liquid polyisoprene (in the uncured rubber composition) in the present invention is as a wire coat compound rubber composition), the silica will generally range from 10 to 30 phr.

A class of compounding materials sometimes used in rubber compositions are known as scorch retarders. Such materials may be, for example, phthalic anhydride, salicylic acid, sodium acetate and N-cyclohexyl thiophthalimide. Scorch retarders, if used, are generally used in an amount ranging from 0.1 to 0.5 phr.

Conventionally, antioxidants and sometimes antiozonants, hereinafter referred to as antidegradants, are added to rubber stocks. Representative antidegradants include monophenols, bisphenols, thiobisphenols, polyphenols, hydroquinone derivatives, phosphites, thioesters, naphthyl amines, diphenyl-p-phenylenediamines, diphenylamines and other diaryl amine derivatives, para-phenylenediamines, quinolines and mixtures thereof. Specific examples of such antidegradants are disclosed in The Vanderbilt Rubber Handbook (1990), Pages 282 through 286. Antidegradants are generally used in amounts from 0.25 to 5 phr with a range of from 1 to 3 phr being preferred.

An organo-cobalt compound which may also be used in the wire coat rubber composition of this invention, depending somewhat upon the specific nature of the cobalt material selected, particularly the amount of cobalt metal present in the compound.

The amount of the cobalt material, if used, may range for example, from 0.2 to 5 phr. Preferably, the amount of cobalt compound, if used, may range from 0.5 to 2 phr. When used, the amount of cobalt material present in the stock composition should be sufficient to provide from 0.01 percent to 0.50 percent by weight of cobalt metal based upon total weight of the rubber stock composition with the preferred amounts being from 0.03 percent to 0.2 percent by weight of cobalt metal based on total weight of skim stock composition.

The sulfur vulcanizable rubber compound for the wire coat (wire encapsulation) may normally be cured at a temperature ranging from 125°C to 180°C. Preferably, the temperature ranges from 135°C to 160°C.

The mixing of the rubber compound can be accomplished by methods known to those having skill in the rubber mixing art. For example, the ingredients are typically mixed in at least two stages, namely at least one non-productive stage followed by a productive mix stage. The final curatives are typically mixed in the final stage which is conventionally called the "productive" mix stage in which the mixing typically occurs at a temperature, or ultimate temperature, lower than the mix temperature(s) than the preceding non-productive mix stage(s). The ester of aminobenzoic acid and cobalt compound, if used, is mixed in one or more non-productive mix stages. The sulfur and accelerator(s) are generally mixed in the productive mix stage. The terms "non-productive" and "productive" mix stages are well known to those having skill in the rubber mixing art.

The rubber composition of this invention is directed to wire coat rubber compositions, or coatings, as hereinbefore described. For example, it can be used for wire coat for wire reinforced components of hoses, power transmission belts, conveyor belts and, in particular, tire components. Such pneumatic tires can be built, shaped, molded and cured by various methods which are known and will be readily apparent to those having skill in such art. As can be appreciated, the tire may be a passenger tire, truck tire and the like.

The present invention may be further understood by reference to the following examples in which the parts or percentages are by weight unless otherwise indicated.

### EXAMPLE I

Rubber compositions were prepared which were comprised of natural cis 1,4-polyisoprene rubber for Control Sample A and of a combination of natural cis 1,4-polyisoprene rubber and liquid cis 1,4-polyisoprene polymer for Sample B

The rubber compositions were prepared in a two non-productive mixing stages followed by a productive mixing stage in an internal rubber mixer in a rather conventional rubber composition mixing sequence. Other than the ingredients listed in Table I, the nonproductive stages for both samples contained natural cis 1,4-polyisoprene, liquid cis 1,4-polyisoprene (for Sample B), cobalt compound naphthenate, and conventional amounts of rubber processing oil, stearic acid, carbon black, antidegradants and synthetic precipitated silica, and silane coupling agent. The conventional amounts of accelerators, antidegradant, zinc oxide and sulfur were added during the productive stage. Table 1 below shows the levels of various rubber composition ingredients used.

**Table 1**

| | Control Sample A | Sample B |
|---|---|---|
| Natural cis 1,4-polyisoprene rubber | 100 | 100 |
| Liquid polyisoprene¹ | 0 | 10 |
| Carbon black (N326) | 57 | 57 |
| Silica² | 10 | 10 |
| Silane coupling agent³ | 2 | 2 |
| Cobalt naphthenate | 1 | 1 |
| N-dicyclohexyl-2-benzothiazole sulfenamide | 0.95 | 1.05 |
| Diphenyl guanidine | 0.10 | 0.11 |
| Sulfur | 4.00 | 4.40 |

| | | |
|---|---|---|
| ¹Liquid polyisoprene as DPR-40 from Elementis Performance Polymers having an number average molecular weight (Mn) of about 40,000 | | |
| ²Obtained as VN3 from Degussa AG | | |
| ³Obtained as Si-69 from Degussa AG | | |

Various cure properties of the Samples were determined using a Monsanto oscillating disc rheometer which was operated at a temperature of 150°C and 100 cycles per minute. A description of oscillating disc rheometers can be found in The Vanderbilt Rubber Handbook edited by Robert O. Ohm (Norwalk, Conn., R. T. Vanderbilt Company, Inc., 1990), Pages 554 through 557. The use of this cure meter and standardized values read from the curve are specified in ASTM D-2084. A typical cure curve obtained on an oscillating disc rheometer is shown on Page 555 of the 1990 edition of The Vanderbilt Rubber Handbook.

In such an oscillating disc rheometer, compounded rubber Samples are subjected to an oscillating shearing action of constant amplitude. The torque of the oscillating disc embedded in the stock that is being tested that is required to oscillate the rotor at the vulcanization temperature is measured. The values obtained using this cure test are very significant since changes in the rubber or the compounding recipe are very readily detected. It is obvious that it is normally advantageous to have a fast cure rate.

The following Table 2 reports various cure properties that were determined from cure curves that were obtained for the rubber Samples. These properties include a torque minimum (minimum torque), a torque maximum (maximum torque), minutes to 25 percent of the torque increase (T25) and minutes to 90 percent of the torque increase (T90).

Peel adhesion testing was measured to determine the interfacial adhesion between the rubber formulations that were prepared. The interfacial adhesion was determined by pulling one compound from another at a right angle to the untorn test specimen with the two right ends being pulled apart at a 180° angle to each other using an Instron machine. The area of contact was determined from placement of a Mylar™ sheet between the compounds during cure. A window in the Mylar™ allowed the materials to come into contact with each other during testing. For this example, two samples of the same rubber composition were used to pull apart from each other.

Standard wire adhesion tests (SWAT) were conducted by embedding a single brass-plated cord in the respective rubber compositions. The rubber articles were then cured at 150°C for 27 minutes. The steel cord in these rubber compositions were then subjected to a pull-out test, according to ASTM Standard D2229-73. The results of these pull-out tests (SWAT) are given below and identified as Original in Table 2 and expressed in Newtons. Adhesion tests were also conducted on the rubber articles after curing and then subjecting the cured samples to 10 days at 120°C in nitrogen.

**Table 2**

| Properties | Control Sample A | Sample B |
|---|---|---|
| Mooney Viscosity, 100°C | 51.8 | 34.0 |
| Mooney Scorch Time, 121°C | 42.0 | 48.3 |

| Rheometer Cure at 150°C | | |
|---|---|---|
| Minimum torque | 7.2 | 4.4 |
| T25 (minutes) | 7.9 | 8.4 |
| T90 (minutes) | 16.2 | 17.3 |
| Delta Torque | 41.3 | 37.2 |

| Cured Properties | | |
|---|---|---|
| 300% modulus (MPa) | 18.0 | 15.0 |
| Tensile at break (MPa) | 19.7 | 18.6 |
| Elongation at break (%) | 352 | 382 |
| | | |
| Rebound, 100°C | 60.9 | 62.5 |
| Shore A Hardness, 23°C | 74.0 | 68.2 |
| Peel adhesion at 95°C to self, N/mm | 27 | 33 |

| SWAT (Newtons) | | |
|---|---|---|
| Original, % Coverage | 572, 70 | 523, 75 |
| Aged (120°C 10 days in nitrogen), % Coverage | 683, 80 | 666, 95 |

From Table 2 it can be seen that Mooney Viscosity is significantly lower for the uncured rubber composition of Sample B as compared to the Control Sample A.

This is considered herein to be significant because a lower viscosity of the uncured rubber composition is considered herein to be a better processing compound.

With no resins in Sample A, the Mooney Viscosity value of the uncured rubber composition at 100°C of about 52 is considered herein to be too high for good processability.

The addition of only 10 phr of liquid polyisoprene polymer in Sample B is seen to form an uncured rubber composition with a Mooney viscosity value (100°C) of only 34 which is considered herein to be a good rubber processing viscosity for use in a wire coat rubber composition. It should also be noted that Mooney Scorch time is slightly longer for Sample B as compared to the Control Sample A, which means that the compound can be processed adequately with reduced risk of premature vulcanization of the rubber composition.

From Table 2 it can also be seen that the hot rebound value (100°C) of 62 is slightly higher for Sample B as compared to the Control Sample A.

This is considered herein to be significant because an equal or slightly higher hot rebound value indicates a wire coat rubber composition is indicated to generate equal or less heat (temperature rise) under dynamic working conditions of a tire. This is predictive of better durability of the overall tire under working conditions, with less heat build up (less temperature rise) a wire reinforced belt region of the tire.

From Table 2 it can also be seen that the tear strength is higher for Sample B as compared to the Control Sample A.

This is considered herein to be significant because a higher tear strength indicates better durability under physical strain during working conditions. This also is indicative of better overall tire durability insofar as the wire coat is concerned with improved strength of the coated wire in the tire composite in a portion of a tire having a wire reinforced component.

## Claims

1. A tire **characterized by** having at least one component which contains wire encapsulated with an unvulcanized rubber composition which comprises, based upon 100 parts by weight elastomer, (phr):
(A) 100 phr of natural cis 1,4-polyisoprene rubber,
(B) 5 to 30 phr of liquid cis 1,4-polyisoprene polymer having a number average (Mn) molecular weight of not more than 80,000,
(C) 50 to 100 phr of particulate reinforcing filler comprised of carbon black and precipitated silica which contains from 40 to 80 phr of said carbon black.

2. The tire of claim 1 wherein said liquid polyisoprene polymer has a molecular weight (Mn) in a range of 35,000 to 60,000.

3. The tire of either of the preceding claims wherein said tire component of rubber composition encapsulated wire reinforcement is sulfur cured.

4. The tire of any of the preceding claims wherein said wire is at least one brass coated steel wire filament.

5. The tire of any of the preceding claims wherein said wire is a plurality of cabled wire filaments.

6. The tire of any of the preceding claims wherein said tire component is a carcass ply.
